# EUROPEAN PATENT SPECIFICATION

(11) **EP 1 614 597 B1**
(45) Date of publication and mention of the grant of the patent: **01.07.2009**
(21) Application number: 05380103.1
(22) Date of filing: 24.05.2005
(51) Int. Cl.: B60T 7/10, F16C 1/22

(54) **Device for adjusting the length of a sheath and/or a driving cable**
Vorrichtung zur Längeneinstellung einer Hülle und/oder eines Antriebskabels
Dispositif de réglage de la longueur d'un câble tracteur et/ou de son revêtement

(30) Priority: 05.07.2004 ES 200401634
(43) Date of publication of application: 11.01.2006
(73) Proprietor: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(56) References cited:
- EP-A- 0 234 814
- EP-A- 0 779 441
- DE-A1- 4 336 221
- US-A- 4 693 137

## Description

The present invention relates to a device for adjusting the length of a sheath and/or a driving cable which novel features provide many advantages, as it will be disclosed in the present specification.

Specifically, the invention refers to a device for adjusting the length of a sheath and/or a cable for any driving system using a driving cable and a sheath in a motor vehicle, for example the handbrake of a motor vehicle. It is a mechanism for taking up the necessary free movement in the assembly of the primary and secondary brake driving cables in the drums or disk and the handbrake lever. The purpose of such device is to reduce the play of the cable sheath to a minimum once the cables have been assembled.

This reduction of play in the cable sheath is carried out as a necessary initial operation in the assembly of the handbrake, since the length of said cable sheath is not always appropriate for effective operation. The working length adjustment of the sheath and/or the cable could have to be carried out also after a certain mileage of the vehicle.

The cable sheath of the motor vehicle handbrake is usually assembled by fitting it in its corresponding housings into the brake system and subsequently it is adjusted by actuating the lever several times to adapt the brake cable to its travel. However, the cable sheath usually has undesirable initial free plays making this assembly method not always appropriate, an adjustment device being thus necessary such as the one described hereinbelow according to the present invention.

EP 0 234 814 discloses an adjuster device with a cable control assembly with the features of the preamble of claim 1.

The invention provides a device for adjusting the length of a sheath and/or a driving cable, for example in a motor vehicle handbrake. The adjusting device of the invention generally comprises a fixed element relative to which a moveable body associated with one end of the sheath of said cable, specifically with a sheath terminal, may be axially moved. The moveable member may be locked at a given axial position for taking up the play in the sheath.

More specifically, according to the invention, the fixed element is a housing, for example a hollow, cylindrical housing inside of which said moveable element is axially received which movement tends to occur by the action of resilient means comprising, for example, a compression spring outwardly surrounding a central shaft. The design of the spring will depend on the force required for unlocking the system according to the vehicle configuration.

The moveable element that is axially mounted within said housing is a hollow central shaft inside of which the cable is passed through. The central shaft is provided, at one end thereof, with a mouth for fitting the end of said cable sheath.

A series of teeth is formed on the outer part of the central shaft. These teeth have a triangular lateral profile and they are projecting out radially from the central shaft. Preferably, the pitch of said teeth in the central shaft is ranging from 1 to 3 mm.

In the outer part of said central shaft there is provided a number of substantially smooth areas formed therealong. These longitudinal smooth areas cause said teeth are broken thus defining a series of angular sectors and a series of alternating smooth angular sectors.

The device of the invention also comprises a locking member which purpose is restraining the lengthwise movement of the central shaft relative to the housing once the desired sheath tightening has been determined. This locking member may be further actuated for releasing the central shaft enabling its movement, in the vehicle sheath and/or cable adjusting operation.

Specifically, said locking member comprises a body made from at least one piece (for example two or more) inside of which a central shaft may be moved lengthwise. The interior of the locking member that receives the central shaft has a toothing matching the tooth in the central shaft and a series of protrusions projecting radially inwardly thereto formed matching said smooth areas in the central shaft.

The radius of the external teeth in the central shaft and the radius of the interior teeth in the locking member are substantially the same so as to provide a soft movement of the central shaft relative to the locking member.

At a given angular position of the locking member relative to the central shaft (that is reached by rotating, for example by 45°, said locking member around said shaft), the central shaft is locked without possibility of longitudinal displacement relative to the locking member and the housing, being locked in place. It is to be pointed out that the locking/unlocking angle is preferably of 45°, this value depending on the number of tooth rows and smooth surfaces in the central shaft and the locking member.

Thus, the axial position of the end of the cable sheath associated with the device may be varied depending on the relative axial position taken up by said central shaft inside the housing, said teeth in the central shaft allowing intermediate axial positions for an accurate adjusting of the sheath and/or cable length.

In order to operate the locking member from the outside of the housing, there is envisaged to provide an outer actuator knob. This actuator knob comprises a piece rotatably fitted at one end of the housing. The actuator knob is provided with inner flanges projecting lengthwise to the locking member. These flanges of the actuator knob are inserted in grooves formed outside the locking member. Rotation of the actuator knob therefore results in rotation of the locking member for releasing the central shaft in the operation for adjusting the length of the sheath and/or the cable, for example in a handbrake device of a motor vehicle.

Advantageously, the flanges and the complementary recesses in said locking member have a dovetail configuration for an effective coupling of the pieces of the locking member when in use, since said pieces have to withstand the force resulting when being actuated, for example in a handbrake, that is imparted by the sheath to the device of the invention (of the order of at least 300 Kg).

As outlined above, there is provided a spring carrying out a force that tends to move the central shaft. For this purpose, the spring is located inside the housing surrounding outwardly the central shaft. The spring is mounted between said locking member and a stop element solid with the end of the central shaft.

For ensuring the assembly tightness, the device includes a series of sealing gaskets arranged inside the housing. Said housing is preferably cylindrical in shape so that the sealing gaskets work in an effective way. This cylindrical design, together with the angular movement of the locking member allows the whole device is sealed due to the provision of such sealing gaskets (O-rings and/or cylindrical gaskets), said gasket system being cost effective and reliable.

In the initial assembling position, the central shaft of the device is in the axial position corresponding to the spring maximum compression. When all the parts in the mechanism, for example of a handbrake, are assembled, the locking member is rotated by 45° through the outer actuator knob causing the opposed toothing between the central shaft and the locking member which are arranged in the smooth angular sectors of the central shaft to be released. It should be pointed out that rotation of said locking member may be of another extent, depending on the number of tooth rows and smooth surfaces in the central shaft and the locking member.

At this time, the spring is acting on the stop element solid with the end of the central shaft, pushing it so that it is moved away as far as possible from the compressed position. This movement causes the sheath terminal and the sheath to be dragged consequently resulting in a tension on the internal cable that is not dragged in this movement of the central shaft of the device.

Once the assembly is extended, the locking member is rotated again by 45° in the reverse direction through the knob so that the teeth are meshed between the central shaft and the interior of said locking member, thus locking the central shaft of the device in place.

The features and the advantages of the device of the present invention will be clearer from the detailed description of a preferred embodiment thereof. This description will be given, from now on, by way of a non limitative example, relating to the drawings.

In these drawings:

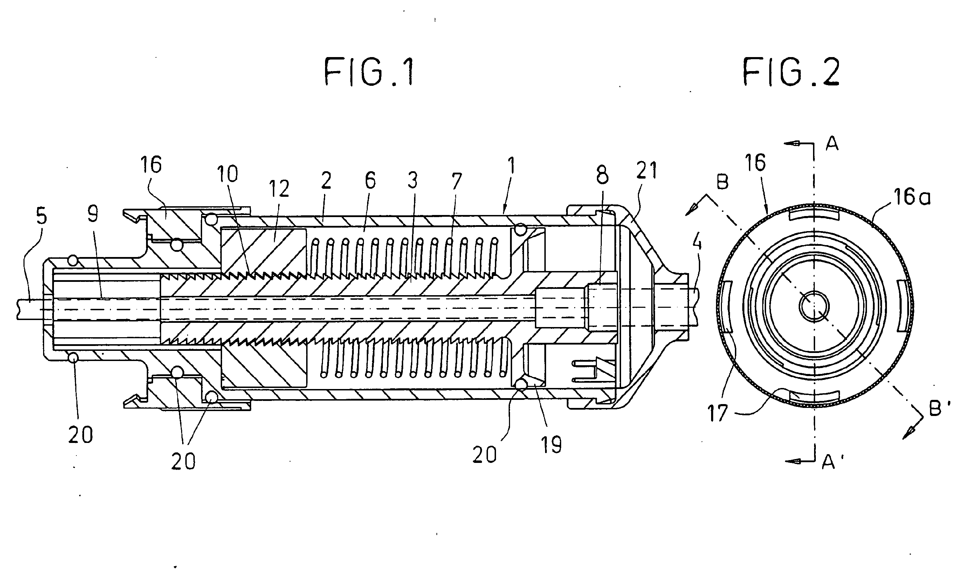

Figure 1 is a longitudinal sectional view taken along line AA' in figure 2 of one embodiment of a device for adjusting the length of the sheath and/or the cable of a handbrake mechanism in a motor vehicle according the invention;
Figure 2 is a front elevational view of the device in figure 1, where the outer actuator knob is shown;
Figure 3 is a side elevational view of the device in figure 1;
Figure 4 is a longitudinal sectional view taken along line BB' in figure 2 of the adjusting device of the invention; and
Figure 5 is a perspective view of the central shaft and the locking element of the adjusting device of the invention.

The device for adjusting the length of the sheath and/or the cable of a handbrake of a motor vehicle shown in the figures has been denoted as a whole with reference numeral (1).

The device (1) of the embodiment that is herein shown essentially comprises a fixed element or housing (2) relative to which a movable body or central shaft (3) associated with a terminal of the sheath (4) of the cable (5) in the handbrake (it could be the driving cable of any other mechanism) may be axially moved.

The housing (2) is a tubular body cylindrical in shape in which interior (6) the central shaft (3) of the device (1) is received. The central shaft (3) may be moved lengthwise by the action of resilient means comprising a compression spring indicated at (7) in the figures.

The central shaft (3) is hollow and it has a mouth (8) at an end thereof for fitting the terminal of the sheath (4) of the cable (5) leading to a handbrake distributor. The cable (5) driving the brake runs through the interior (9) of the central shaft (3). At the opposed end of the device (1), the cable (5) leads to the handbrake lever (not shown in the drawings).

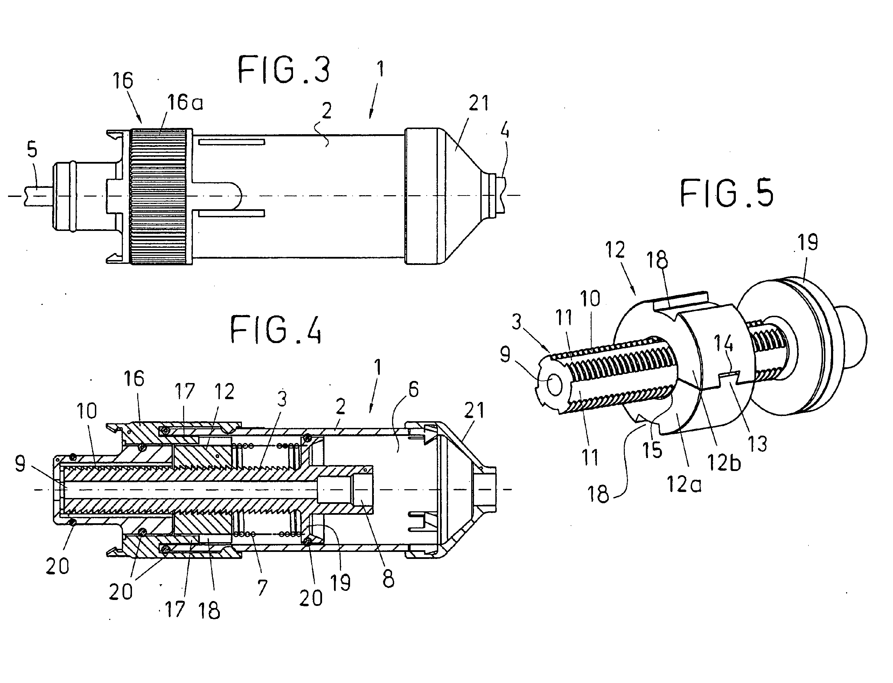

As it may be seen, a series of teeth (10) having a spacing or pitch lying in the range of 1 to 3 mm is formed on the outer part of the central shaft (3). The teeth (10) have a triangular profile and they project out radially from the central shaft (3). As shown in figure 5, in the outer part of the central shaft (3) substantially smooth areas (11) are defined formed therealong causing alternating toothed angular sectors and smooth angular sectors to be alternately formed. In the example shown in the figures four toothed angular sectors (10) and four smooth angular sectors (11) are provided.

The device (1) is further provided with a locking member (12). As shown in figure 5 of the drawings, the locking member (12) comprises two pieces (12a, 12b) which may be engaged to each other by means of the provision of flanges (13) and complementary recesses (14) having a dovetail configuration. The configuration of the locking member (12) from two pieces (12a, 12b) which may be engaged to each other is due to an imperative of production, but it will be understood that it may be formed of more pieces which may be engaged to each other.

The function of the locking member (12) is to restrain the lengthwise movement of the central shaft (3) relative to the housing (2) of the device (1). The locking member (12) may be further actuated for enabling the movement of the central shaft (3) in the vehicle handbrake sheath and/or cable adjusting operation as it is described below.

The locking member (12) has a central hole (15) with an inner toothing matching the toothing (10) in the central shaft (3) and a series of protrusions projecting radially inwardly thereto formed matching said smooth areas (11) in the central shaft (3). The outer radius of the toothing (10) in the central shaft (3) and the radius of the inner toothing in the locking member (12) are substantially the same for providing a soft movement of the central shaft (3) relative the locking member (12).

As the locking member (12) is rotated by the operator that is assembling the device (1) by 45° around the central shaft (3) it becomes axially locked and it is not allowed to be moved, being locked in place. This allows the axial position of the terminal of the sheath (4) of the cable (5) associated with the device (1) to be varied depending on the relative axial position taking up by said central shaft (3) in the interior (6) of the housing (2). The teeth (10) in the central shaft (3) allow different intermediate axial positions to be assumed for accurately adjusting the length of the sheath and/or the cable.

For operating the locking member (12) from the exterior of the housing (2), the device (1) is provided with an outer actuator knob (16). This actuator knob (16) comprises a hollow, cylindrical piece with an outer friction surface (16a) so that grip is enhanced on rotation. The outer actuator knob (16) is rotatably mounted in the housing (2). The knob (16) has inner flanges (17), shown in the sectional view in figure 4, projecting lengthwise to the locking member (12). The flanges (17) in the actuator knob (16) are inserted into grooves (18) formed outside the locking member (12), as shown in figures 4 and 5 of the drawings. The outer actuator knob (16) and the locking member (12) are thus attached and, as a result, when rotating the outer actuator knob (16) rotation of the locking member (12) takes place thus locking or releasing the central shaft (3) in the operation for adjusting of the length of the sheath and/or the cable.

The compression spring (7) carries out a force opposing to the axial displacement of the central shaft (3) to the left hand in the drawings. This spring (7) is provided in the interior (6) of the housing (2) surrounding outwardly the central shaft (3). The spring (7) is fitted between the locking member (12) and a stop element (19) solid with the end of the central shaft (3).

For ensuring the assembly tightness, the device includes a series of sealing gaskets (20) arranged inside the housing as well as a cover (21) covering the end of the device (1). The cylindrical shape of said housing (2) allows these gaskets working in an effective way.

The central shaft (3) is initially in the axial position corresponding to the maximum compression of the spring (7), the handbrake cable sheath having the greater freedom in axial movement. When all the part in the handbrake mechanism are assembled, the locking member (12) is rotated by 45° through of the outer actuator knob (16) causing the opposed toothing between the central shaft (3) and that in the locking member (12) to be released, respectively, so that the toothed angular sectors of the locking member (3) are disposed in the smooth angular sectors of the central shaft (3). At this time, the spring (7) acts on the stop element (19) that is solid with the end of the central shaft (3), pushing it so as to move it away from the locking member (12) to the position of expansion of the spring (7). This movement causes the terminal of the sheath (4) and the sheath to be dragged, which results in a tension on the internal cable (5) that is not dragged in this movement of the central shaft (3) of the device (1).

The central shaft (3) has been moved along the desired distance for taking up the initial play of the sheath and the locking member (12) is rotated again by 45° by the operator in a reverse direction through the actuator knob (16) locking the shaft (3) since the teeth of the locking member (12) are meshed with those of the central shaft (3).

Once having been sufficiently described what the device (1) for adjusting the length of the sheath (4) of the cable (5) and/or the handbrake of a motor vehicle of the present invention consists in accordance with the enclosed drawings, it will be understood that any detail modification can be introduced as appropriate, unless variations may alter the essence of the invention as summarized in the appended claims.

## Claims

1. Device (1) for adjusting the length of a sheath (4) and/or a driving cable (5) comprising a fixed element (2) relative to which a movable body (3) associated with one end of the sheath (4) of said cable (5) may be axially moved, **characterized in that** said fixed element is a housing (2) in which interior (6) said moveable element (3) is axially received by the action of resilient means (7), said movable element being a hollow central shaft (3) through which the cable (5) is passed having a mouth (8) for fitting the end of said sheath (4), the outer part of said central shaft (3) having a series of teeth (10) projecting out radially and a series of substantially smooth areas (11) formed along said central shaft (3), the device (1) further comprising a locking member (12) having a body formed of at least one piece for which interior (15) said central shaft (3) may be slid, said member (13) having an inner toothing and a series of protrusions projecting out radially from the interior thereof formed matching said toothed area (10) and said smooth area (11) of the central shaft (3), respectively, so that rotation of said locking member (12) around the central shaft (3) causes that, at a given angular position relative thereto, said central shaft (3) is not allowed to be axially moved, so that the axial position of the end of the sheath (4) of the driving cable (5) associated with the device (1) may be varied depending on the relative axial position taken up by said central shaft (3) in the interior (6) of the housing (2), said teeth (10) in the central shaft (3) allowing intermediate axial positions for an accurate adjusting of the length of said sheath (4) and/or said driving cable (5).

2. Device (1) as claimed in claim 1, **characterized in that** it comprises an outer actuator knob (16) having a piece rotatably fitted in said housing (2) which is provided with inner flanges (17) projecting lengthwise to said locking member (12), which are fitted into grooves (18) formed therein, so that rotation of said actuator knob (16) results in rotation of the locking member (12) for locking or releasing the central shaft (3) in the operation for adjusting the length of the sheath (4) and/or said cable (5).

3. Device (1) as claimed in claim 1, **characterized in that** said locking member (12) is formed of at least two pieces (12a, 12b) which may be engaged to each other by means of flanges (13) and complementary recesses (14).

4. Device (1) as claimed in claim 3, **characterized in that** said flanges (13) and complementary recesses (14) in said locking member (12) have a dovetail configuration.

5. Device (1) as claimed in any of the preceding claims, **characterized in that** it comprises a series of sealing gaskets (20) disposed in said housing (2).

6. Device (1) as claimed in claim 1, **characterized in that** the pitch of said teeth (10) in the central shaft (3) lies in the range of 1 to 3 mm.

7. Device (1) as claimed in claim 1, **characterized in that** the angular displacement of the locking member (12) relative to the central shaft (3) for its locking or releasing is 45°.

8. Device (1) as claimed in claim 1, **characterized in that** said resilient means comprise a compression spring (7).

9. Device (1) as claimed in claim 8, **characterized in that** said compression spring (7) is disposed surrounding outwardly the central shaft (3), being fitted between the locking member (12) and a stop element (19) solid with the end of the central shaft (3).

10. Device (1) as claimed in claim 1, **characterized in that** the radius of the external teeth (10) in the central shaft (3) and the radius of the inner teeth in the locking member (12) are substantially the same.

11. Device (1) as claimed in claim 1,
**characterized in that** said housing (2) is cylindrical in shape.

## Patentansprüche

1. Vorrichtung (1) zur Regulierung der Länge eines Kabelmantels (4) und/oder eines Antriebskabels (5), bestehend aus einem festen Teil (2), zu welchem ein mit einem der Enden des Kabelmantels (4) des Kabels (5) verbundener beweglicher Körper (3) axial verschiebbar ist, **dadurch gekennzeichnet, dass** das feste Teil ein Gehäuse (2) ist, in dessen Innerem (6) das bewegliche Teil (3) unter Einwirkung elastischer Mittel (7) axial aufgenommen wird, wobei das bewegliche Teil eine zentrale Hohlwelle (3), durch die das Kabel (5) hindurchgeführt wird, darstellt und ein Mündungsstück (8) zur Befestigung des Endes des Kabelmantels (4) besitzt und wobei die Außenseite der Zentralwelle (3) eine Reihe von strahlenförmig herausragenden Zähnen (10) und eine Reihe von im Wesentlichen glatten Bereichen (11) aufweist, die entlang der Zentralwelle (3) ausgebildet sind; darüber hinaus umfasst die Vorrichtung (1) ein Feststellelement (12) mit einem mindestens einteiligen Körper, an dessen Innenseite (15) die Zentralwelle (3) gleiten kann, wobei das Teil (13) eine Innenverzahnung und eine Reihe von strahlenförmig angeordneten Vorsprüngen besitzt, die aus der Innenseite herausragen und mit dem gezahnten Bereich (10) bzw. dem glatten Bereich (11) der Zentralwelle (3) zusammenpassen, sodass die Drehung des Feststellelementes (12) um die Zentralwelle (3) bewirkt, dass bei einer bestimmten relativen Winkelstellung die Zentralwelle (3) sich nicht mehr axial verschieben lässt, sodass die axiale Stellung des Endes des Kabelmantels (4) des mit der Vorrichtung (1) verbundenen Antriebskabels (5) in Abhängigkeit von der relativen axialen Stellung, die die Zentralwelle (3) im Inneren (6) des Gehäuses (2) einnimmt, verstellbar ist, wobei die Zähne (10) an der Zentralwelle (3) axiale Zwischenstellungen erlauben, um die exakte Regulierung der Länge des Kabelmantels (4) und/oder des Antriebskabels (5) zu ermöglichen.

2. Vorrichtung (1) nach Anspruch 1, **dadurch gekennzeichnet, dass** sie einen äußeren Betätigungsknopf (16) umfasst, der ein in dem Gehäuse (2) drehbar befestigtes Teil besitzt, das mit Innenflanschen (17), die in Längsrichtung zu dem Feststellelement (12) herausragen und in darin ausgebildeten Nuten (18) befestigt werden, versehen ist, sodass die Drehung des Betätigungsknopfes (16) die Drehung des Feststellelementes (12) zum Feststellen oder Lösen der Zentralwelle (3) während des Vorgangs der Längenregulierung des Kabelmantels (4) und/oder des Kabels (5) bewirkt.

3. Vorrichtung (1) nach Anspruch 1, **dadurch gekennzeichnet, dass** das Feststellelement (12) aus mindestens zwei Teilen (12a, 12b) besteht, die mittels Flanschen (13) und ergänzenden Aussparungen (14) miteinander verbunden werden können.

4. Vorrichtung (1) nach Anspruch 3, **dadurch gekennzeichnet, dass** die Flansche (13) und die ergänzenden Aussparungen (14) an dem Feststellelement (12) schwalbenschwanzförmig ausgebildet sind.

5. Vorrichtung (1) nach einem der vorhergehenden Ansprüche, **dadurch gekennzeichnet, dass** sie eine Reihe von Dichtungen (20) umfasst, die in dem Gehäuse (2) angeordnet sind.

6. Vorrichtung (1) nach Anspruch 1, **dadurch gekennzeichnet, dass** der Abstand zwischen den Zähnen (10) an der Zentralwelle (3) zwischen 1 und 3 mm liegt.

7. Vorrichtung (1) nach Anspruch 1, **dadurch gekennzeichnet, dass** die Winkelverschiebung des Feststellelementes (12) im Verhältnis zur Zentralwelle (3) zu deren Feststellen oder Lösen 45° beträgt.

8. Vorrichtung (1) nach Anspruch 1, **dadurch gekennzeichnet, dass** die elastischen Mittel eine Druckfeder (7) umfassen.

9. Vorrichtung (1) nach Anspruch 8, **dadurch gekennzeichnet, dass** die Druckfeder (7) so angeordnet ist, dass sie die Zentralwelle (3) von außen umschließt, wobei sie zwischen dem Feststellelement (12) und einem mit dem Ende der Zentralwelle (3) fest verbundenen Anschlagelement (19) angebracht ist.

10. Vorrichtung (1) nach Anspruch 1, **dadurch gekennzeichnet, dass** der Radius der äußeren Zähne (10) an der Zentralwelle (3) und der Radius der inneren Zähne am Feststellelement (12) im Wesentlichen gleich sind.

11. Vorrichtung (1) nach Anspruch 1, **dadurch gekennzeichnet, dass** das Gehäuse (2) eine zylindrische Form aufweist.

## Revendications

1. Dispositif (1) pour le réglage de la longueur d'une gaine (4) et/ou d'un câble conducteur (5) comprenant un élément fixe (2) auquel est relié un corps déplaçable (3) associé à une extrémité de la gaine (4) dudit câble (5) qui peut être déplacé axialement, **caractérisé en ce que** ledit élément fixe est un logement (2) à l'intérieur (6) duquel ledit élément déplaçable (3) est axialement reçu par l'action de moyens résilients (7), cet élément déplaçable étant une tige centrale creuse (3) à travers laquelle le câble (5) passe présentant un embout (8) pour y adapter l'extrémité de ladite gaine (4), la partie extérieure de ladite tige centrale (3) ayant une série de dents (10) se projetant radialement et une série de zones substantiellement lisses (11) formées le long de ladite tige centrale (13), le dispositif (1) comprenant ensuite un élément de verrouillage (12) ayant un corps formé au moins d'une pièce à l'intérieur (15) de laquelle ladite tige centrale (3) peut coulisser, cet élément ayant un crantage intérieur et une série de protubérances se projetant radialement depuis son intérieur formé de sorte à correspondre avec cette zone dentée (10) et ladite zone lisse (11) de la tige centrale (3), respectivement, de sorte que la rotation de cet élément de verrouillage (12) autour de la tige centrale (3) fait que, à une position angulaire relative à celle-ci, ladite tige centrale (3) ne peut pas se déplacer axialement, de sorte que la position axiale de l'extrémité de la gaine (4) du câble conducteur (5) associée audit dispositif (1) peut varier en fonction de la position axiale relative prise par cette tige centrale (3) à l'intérieur (6) du logement (2), ces dents (10) dans la tige centrale (3) permettant des positions axiales intermédiaires pour un ajustement précis de la longueur de ladite gaine (4) et/ou dudit câble conducteur (5).

2. Dispositif (1) de la manière indiquée dans la revendication 1, **caractérisé en ce qu'**il comprend un bouton actionneur extérieur (16) ayant une pièce rotative logée dans ledit logement (2) qui est munie de rebords intérieurs (17) se projetant longitudinalement sur ledit élément de verrouillage (12) qui sont logés dans des rainures (18) qui y sont formées, de sorte que la rotation dudit bouton actionneur (16) provoque une rotation de l'élément de verrouillage (12) pour le verrouillage ou la libération de la tige centrale (3) lors de l'opération d'ajustement de la longueur de la gaine (4) et/ou dudit câble (5).

3. Dispositif (1) de la manière indiquée dans la revendication 1, **caractérisé en ce que** ledit élément de verrouillage (12) est formé au moins de deux pièces (12a, 12b) qui peuvent s'engager l'une dans l'autre au moyen de rebords (13) et de creux (14) complémentaires.

4. Dispositif (1) de la manière indiquée dans la revendication 3, **caractérisé en ce que** lesdits rebords (13) et creux (14) complémentaires dans ledit élément de verrouillage (12) ont une configuration en queue d'aronde.

5. Dispositif (1) de la manière indiquée dans n'importe laquelle des revendications précédentes, **caractérisé en ce qu'**il comprend une série de joints d'étanchéité (20) disposés dans ledit logement (2).

6. Dispositif (1) de la manière indiquée dans la revendication 1, **caractérisé en ce que** le téton desdites dents (10) dans la tige centrale (3) s'étend sur une plage de 1 à 3 mm.

7. Dispositif (1) de la manière indiquée dans la revendication 1, **caractérisé en ce que** le déplacement angulaire de l'élément de verrouillage (12) relatif à la tige centrale (3) pour son verrouillage ou libération est de 45°-.

8. Dispositif (1) de la manière indiquée dans la revendication 1, **caractérisé en ce que** lesdits moyens résilients comprennent un ressort de compression (7).

9. Dispositif (1) de la manière indiquée dans la revendication 8, **caractérisé en ce que** ce ressort de compression (7) est disposé autour et extérieurement de la tige centrale (3), en étant fixé entre l'élément de verrouillage (12) et un élément de butée (19) solidaire avec l'extrémité de la tige centrale (3).

10. Dispositif (1) de la manière indiquée dans la revendication 1, **caractérisé en ce que** le rayon des dents externes (10) dans la tige centrale (3) et le rayon des dents internes dans l'élément de verrouillage (12) sont quasiment les mêmes.

11. Dispositif (1) de la manière indiquée dans la revendication 1, **caractérisé en ce que** ledit logement (2) a une forme cylindrique.
